Europäisches Patentamt

European Patent Office

Office européen des brevets

(19)

(11) Veröffentlichungsnummer: **0 155 614
B1**

# (12) EUROPÄISCHE PATENTSCHRIFT

(45) Veröffentlichungstag der Patentschrift:
26.10.88

(21) Anmeldenummer: **85102727.6**

(22) Anmeldetag: **09.03.85**

(51) Int. Cl.⁴: **B 32 B 17/10,** C 03 C 27/12,
B 60 J 1/00

(54) Elektrisch beheizbare Verbundglasscheibe.

(30) Priorität: **20.03.84 DE 3410117**

(43) Veröffentlichungstag der Anmeldung:
**25.09.85 Patentblatt 85/39**

(45) Bekanntmachung des Hinweises auf die Patenterteilung:
**26.10.88 Patentblatt 88/43**

(84) Benannte Vertragsstaaten:
**DE FR IT SE**

(56) Entgegenhaltungen:
**EP - A - 0 013 970
FR - A - 2 532 300**

(73) Patentinhaber: **VEGLA Vereinigte Glaswerke GmbH,
Viktoriaallee 3-5, D-5100 Aachen (DE)**

(72) Erfinder: **Krämling, Franz, Dr., Josef-Ponten-Strasse 91,
D-5100 Aachen (DE)**
Erfinder: **Bartetzko, Joachim, Amselweg 37,
D-5190 Stolberg (DE)**

(74) Vertreter: **Biermann, Wilhelm, Dr.-Ing. et al, VEGLA
Vereinigte Glaswerke GmbH Viktoriaallee 3-5,
D-5100 Aachen (DE)**

## Beschreibung

Die Erfindung betrifft eine elektrisch beheizbare Verbundglasscheibe aus wenigstens zwei Glasscheiben, die mittels einer thermoplastischen Zwischenschicht aus transparentem Kunststoff, in der Linien- oder streifenförmige elektrische Heizleiter eingebettet sind, miteinander verbunden sind.

Elektrische Heizscheiben dieser Art sind mit unterschiedlichem Aufbau bekannt. Sie finden beispielsweise als beheizbare Fahrzeugfenster Anwendung. Wenn das beheizbare Feld für die Durchsicht dient und die Glasscheibe von einem Feuchtigkeitsbelag freihalten soll, werden in der Regel dünne Widerstandsdrähte auf der thermoplastischen Zwischenschicht fixiert, die beim Verpressen der einzelnen Schichten zur Herstellung der Verbundglasscheibe in die thermoplastische Zwischenschicht eindringen. Dieses Verfahren ist verhältnismässig aufwendig, weil das Ablegen und Fixieren des Drahtes auf der themoplastischen Zwischenschicht ein zeitraubender und daher kostenintensiver Vorgang ist. Wenn eine Beeinträchtigung der Durchsicht durch die Heizleiter jedoch hingenommen werden kann, oder wenn das beheizte Feld ausserhalb des Sichtfeldes liegt und zu einem anderen Zweck dient, nämlich beispielsweise zum Freitauen eines angefrorenen Scheibenwischers, lassen sich preisgünstigere Verfahren zum Herstellen solcher elektrisch beheizbarer Glasscheiben anwenden.

Bei einer bekannten elektrisch beheizbaren Verbundglasscheibe der eingangs genannten Art wird die thermoplastische Zwischenschicht bildende Kunststoffolie vor ihrem Einbringen zwischen die Glasscheiben mit einem elektrisch leitfähigen Material bedruckt (DE-26 18 869 B2). Beim Aufdrucken der Heizleiter auf die thermoplastische Folie besteht jedoch die Gefahr, dass bei der Weiterverarbeitung der Folie die Heizleiter unterbrochen werden. Die thermoplastische Folie ist nämlich ein verhältnismässig weiches flexibles Gebilde ohne ausreichende Eigensteifigkeit und wird ausserdem bei der Wärme-Überdruck-Behandlung im Zuge des Verbindeprozesses plastisch verformt.

Bei einer anderen bekannten elektrisch beheizbaren Verbundglasscheibe wird eine der beiden Glasscheiben auf der an der Zwischenschicht anliegenden Seite mit den Heizleitern bedruckt (EP 0 013 970 A1). Da zum Bedrucken von Glasscheiben mit Heizleitern grundsätzlich Einbrennfarben verwendet werden, setzt dieses Verfahren voraus, dass die Glasscheiben bereits vor dem Biegeprozess bedruckt und die Heizleiter beim Biegeprozess eingebrannt werden. Dabei besteht die Schwierigkeit, dass beim Biegen des Glasscheibenpaares die Druckpaste, die bei diesen Temperaturen aufschmilzt, mit der anliegenden Oberfläche der anderen Glasscheibe verklebt, so dass das gebogene Scheibenpaar sich nicht mehr voneinander lösen lässt. Nach diesem Verfahren lassen sich daher nur heizbare Verbundglasscheiben mit einem verhältnismässig kleinen Heizfeld herstellen, das an einer Stelle angeordnet werden muss, an der die beiden aufeinanderliegenden Glasscheiben beim Biegen wegen der höheren Temperatur der Aussenflächen sich auseinanderbiegen.

Der Erfindung liegt die Aufgabe zugrunde, eine elektrisch beheizbare Glasscheibe der eingangs genannten Art so auszubilden, dass unter Beibehaltung der Wirtschaftlichkeit des Herstellverfahrens die Glasoberflächen selbst von aufgedruckten Heizleitern freibleiben und andererseits die Anordnung einer elektrischen Widerstandsheizung auf einfache Weise ermöglicht wird, ohne dass die Heizleiter selbst einer besonderen Bruchgefahr ausgesetzt sind.

Erfindungsgemäss wird diese Aufgabe dadurch gelöst, dass die Heizleiter auf einer eigenen Trägerfolie aus einem Kunststoff mit gegenüber der thermoplastischen Zwischenschicht erhöhter Festigkeit und Biegesteifigkeit aufgebracht sind, und dass diese die Heizleiter tragende Folie zwischen der thermoplastischen Zwischenschicht und einer der Glasscheiben angeordnet und zwischen den Heizleitern mit Durchbrechungen versehen ist, die beim Verbinden der einzelnen Schichten von dem Material der thermoplastischen Kunststoffolie ausgefüllt sind und somit eine Verklebung und der anliegenden Glasscheibe im Bereich der Durchbrechungen bewirken.

Zweckmässige Ausgestaltungen und Weiterbildungen der Erfindung ergeben sich aus den Unteransprüchen.

Eine bevorzugte Ausführungsform der Erfindung in Form einer Windschutzscheibe mit einem partiellen Heizfeld im Bereich der Scheibenwischerablage ist in den Zeichnungen dargestellt.

Von den Zeichnungen zeigt

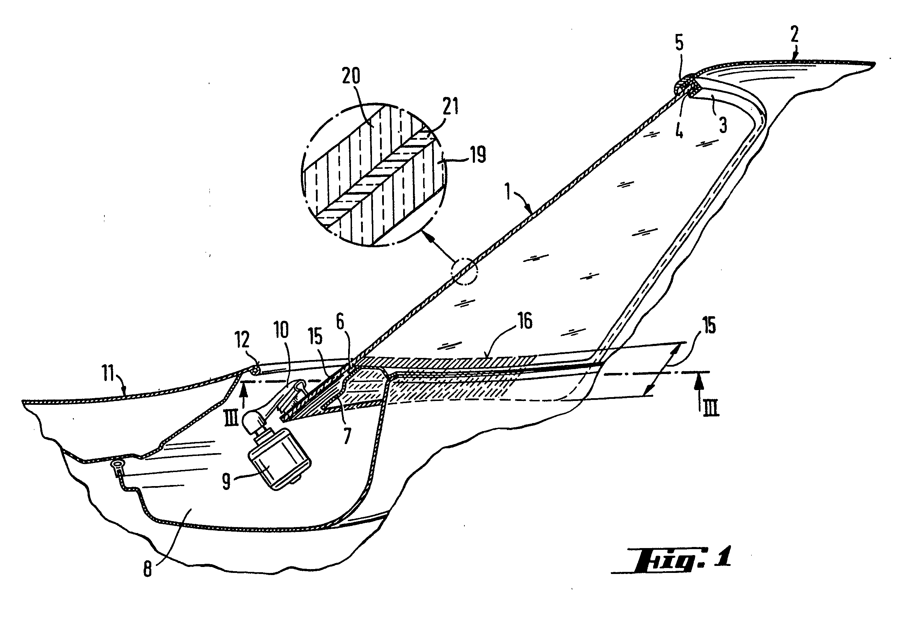

Fig. 1 eine erfindungsgemässe Windschutzscheibe in eingebautem Zustand, dargestellt als Teil eines vertikalen Längsschnitts entlang der Mittelachse eines Kraftfahrzeugs;

Fig. 2 die in Fig. 1 dargestellte Windschutzscheibe in Form der einzelnen Schichten der Verbundglasscheibe vor dem Verbinden der Schichten, und

Fig. 3 einen Längsschnitt durch die in Fig. 1 dargestellte Windschutzscheibe entlang der Linie III–III.

Bei der dargestellten Windschutzscheibe 1 handelt es sich um eine Scheibe, die bei einer Autokarosserie mit versenkt angeordneten Scheibenwischern Anwendung findet. Die Windschutzscheibe 1 ist oben und an den Seiten in dem an dem Karosserieblech 2 angeformten Rahmen 3 befestigt. Zur Befestigung in dem Rahmen 3 dient der Kleberstrang 4. Ein Zierprofil 5 deckt den Kleberstrang 4 nach aussen hin ab. Unten ist die Windschutzscheibe 1 mit Hilfe eines Kleberstrangs 6 mit dem den Fensterausschnitt der Karosserie unten begrenzenden Holm 7 verklebt.

Die Windschutzscheibe 1 setzt sich nach unten über die Verbindungslinie mit der Karosserie hinaus fort und ragt in den Hohlraum 8 hinein, in dem der Scheibenwischermotor 9 angeordnet ist. Die Scheibenwischer 10 liegen in ihrer Ruhestellung auf diesem unteren, in den Hohlraum 8 hineinragenden Teil der Windschutzscheibe 1 auf. In der dargestellten Ruhestellung befinden sich die Scheibenwischer 10 in versenkter Stellung, das heisst unterhalb der Kante 12 der Motorhaube 11, so dass sie von vorn nicht sichtbar sind und auch kein Hindernis für die Luftströmung entlang der Windschutzscheibe darstellen.

In ihrem unteren Bereich 15, der für die Ablage des Scheibenwischers bestimmt ist, ist die Windschutzscheibe 1 elektrisch beheizbar ausgebildet und weist zu diesem Zweck innerhalb der thermoplastischen Zwischenschicht der Verbundglasscheibe einen streifen- oder mäanderförmigen elektrischen Heizwiderstand 16 auf.

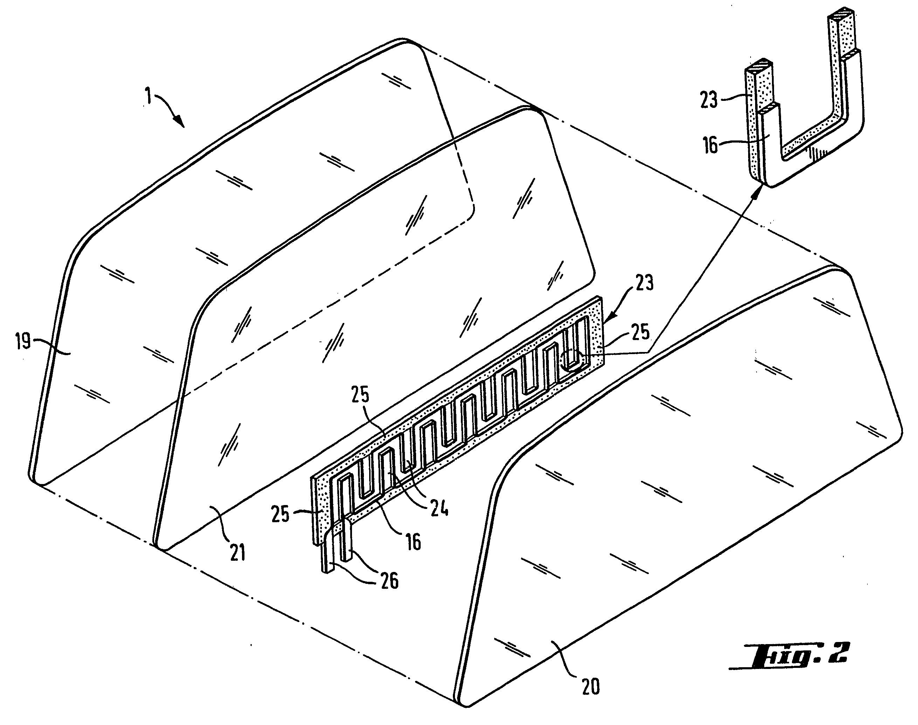

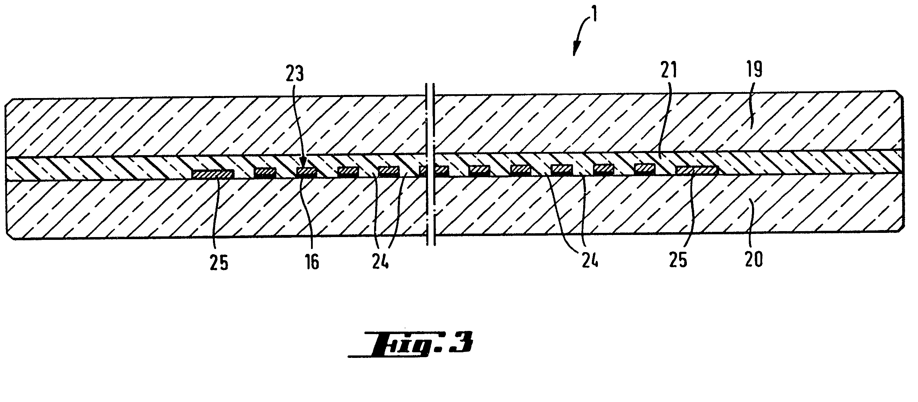

Der Aufbau der Windschutzscheibe 1 ergibt sich im einzelnen aus den Fig. 2 und 3. Die Verbundglasscheibe besteht aus den beiden äusseren Glasscheiben 19 und 20, die mit Hilfe der thermoplastischen Folie 21, insbesondere aus Polyvinylbutyral mit einer handelsüblichen Dicke von 0,76 mm, miteinander verbunden werden. Zwischen der äusseren Glasscheibe 20 und der thermoplastischen Folie 21 ist anschliessend an die untere Kante der Verbundglasscheibe eine auf ihrer Oberfläche mit einem Heizwiderstand 16 versehene Heizfolie 23 angeordnet. Die Heizfolie 23 ist wesentlich dünner als die thermoplastische Folie 21 und hat einschliesslich der Heizwiderstandsschicht 16 eine Dicke von etwa 40 bis 120 μm, und vorzugsweise von etwa 50 μm. Sie besteht aus einem durchsichtigen, verhältnismässig biegesteifen Kunststoff, beispielsweise aus Polyester. Auf einer Oberfläche dieser Folie 23 ist der Heizwiderstand 16 in Form einer dünnen Metallschicht angeordnet. In den Zwischenräumen 24 zwischen den mäanderförmigen Heizleitern 16 ist die Trägerfolie durch Ausstanzen entfernt worden, so dass die Heizfolie an diesen Stellen durchbrochen ist. Der rahmenförmige Randteil 25, der den mäanderförmigen Heizleiter 16 umgibt, sorgt für eine hinreichende Festigkeit der Heizfolie, so dass diese ohne besondere Vorsichtsmassnahmen verarbeitet werden kann. Der Heizleiter 16 besteht vorzugsweise aus einer Schicht aus duktilem Metall wie Aluminium, so dass keine Gefahr besteht, dass die Heizleiter bei einer Biegebeanspruchung der Heizfolie brechen.

Im Bereich des Stromanschlusses ist die Heizfolie 23 mit einer bzw. zwei zungenförmigen Verlängerungen bzw. Anschlussfahnen 26 versehen, die auf ihrer Oberfläche ebenfalls die Metallschicht tragen. Diese Anschlussfahnen 26 ragen aus der fertigen Verbundglasscheibe heraus. Die Stromzuführungsleitungen werden in der üblichen Weise, beispielsweise durch Klemmen oder Löten, mit der Metallschicht auf diesen Anschlussfahnen verbunden.

Beim Verbinden der Schichten unter Anwendung von Wärme und Druck bei dem üblichen Verbindeverfahren im Autoklaven erweicht die Folie 21, dringt in die Zwischenräume 24 zwischen den von dem Heizleiter 16 belegten Teilen der Trägerfolie ein und füllt diese vollständig aus. Die die Zwischenräume 24 durchdringenden Teile der thermoplastischen Folie 21 verbinden sich fest mit der Oberfläche der Glasscheibe 20. Im Endzustand nach dem Verpressen, wie er in Fig. 3 dargestellt ist, ist also die Heizfolie 23 in die thermoplastische Zwischenschicht 21 eingebettet, und die die Durchbrechungen 24 durchdringenden Bereiche der Zwischenschicht 21 sorgen für eine gute und dauerhafte Verbindung der beiden Glasscheiben 19 und 20 auch im Bereich der Heizfolie. Die streifenförmigen Heizleiter 16 selbst liegen unmittelbar an der Oberfläche der Glasscheibe 20 an, und sorgen durch ihren direkten Kontakt mit der Glasscheibe 20, die die nach aussen gerichtete Glasscheibe darstellt, für einen guten Wärmeübergang zu der Aussenfläche der Verbundglasscheibe, wo die Wärme zum Freitauen des Scheibenwischers benötigt wird.

Von besonderem Vorteil ist die neue heizbare Verbundglasscheibe auch deshalb, weil die Heizfolien unabhängig von den Windschutzscheibentypen sind, so dass also Heizfolien ein- und derselben Form und Grösse für die verschiedensten Windschutzscheibentypen einsetzbar sind.

## Patentansprüche

1. Elektrische beheizbare Verbundglasscheibe aus wenigstens zwei Glasscheiben, die mittels einer thermoplastischen Zwischenschicht aus transparentem Kunststoff, in der linien- oder streifenförmige elektrische Heizleiter eingebettet sind, miteinander verbunden sind, dadurch gekennzeichnet, dass die Heizleiter (16) auf einer eigenen Trägerfolie (23) aus einem Kunststoff mit gegenüber der thermoplastischen Zwischenschicht erhöhter Festigkeit und Biegesteifigkeit aufgebracht sind, und dass diese die Heizleiter (16) tragende Folie (23) zwischen der thermoplastischen Zwischenschicht (21) und einer (20) der Glasscheiben (19, 20) angeordnet und zwischen den Heizleitern (16) mit Durchbrechungen (24) versehen ist, die beim Verbinden der einzelnen Schichten von dem Material der thermoplastischen Kunststoffolie (21) ausgefüllt sind und somit eine Verklebung mit der anliegenden Glasscheibe (20) in Bereich der Durchbrechungen (24) bewirken.

2. Elektrisch beheizbare Verbundglasscheibe nach Anspruch 1, dadurch gekennzeichnet, dass die Dicke der mit den linien- oder streifenförmigen Heizleitern (16) versehenen Trägerfolie (23) etwa 5,3 bis 15% der Dicke der thermoplastischen Zwischenschicht beträgt.

3. Elektrisch beheizbare Verbundglasscheibe nach Anspruch 2, dadurch gekennzeichnet, dass die mit den Heizleitern (16) versehene Trägerfolie (23) eine Dicke von etwa 40 bis 120 Mikrometer, und vorzugsweise von etwa 50 Mikrometer aufweist.

4. Elektrisch beheizbare Verbundglasscheibe nach Anspruch 1 bis 3, dadurch gekennzeichnet, dass die Durchbrechungen (24) eine Breite von wenigstens 2 mm aufweisen.

5. Elektrisch beheizbare Verbundglasscheibe nach Anspruch 1 bis 4, dadurch gekennzeichnet, dass die mit den Heizleitern (16) versehene Trägerfolie (23) mit aus der Verbundglasscheibe herausragenden Ansätzen (26) versehen ist, die mit einer metallischen Leitschicht versehen sind und als Anschlussfahnen für den Stromanschluss dienen.

6. Verwendung einer elektrisch beheizbaren Verbundglasscheibe nach Anspruch 1 bis 5 als Kraftfahrzeug-Windschutzscheibe mit einer partiellen Heizfläche im Bereich der Scheibenwischer-Endstellung unterhalb des Sichtbereichs entlang dem unteren Scheibenrand.

### Claims

1. An electrically heated laminated glass sheet comprising at least two glass sheets, which are connected with each other by a thermoplastic intermediate layer of transparent plastic, in which linear or strip-like electrical heating conductors are embedded, characterized in that the heating conductors (16) are applied to their own support foil (23) of a plastic with a strength and flexural rigidity greater than that of the thermoplastic intermediate layer and in that this foil (23) carrying the heating conductors (16) is arranged between the thermoplastic intermediate layer (21) and one (20) of the glass sheets (19 and 20) and between the heating conductors (16) is provided with openings (24), which on connection of the individual layers are filled with the material of the thermoplastic plastic foil (21) and thus effect and adhesive bond to the adjacent glass sheet (20) adjacent to the openings (24).

2. The electrically heated laminated glass sheet as claimed in claim 1, characterized in that the thickness of the support foil (23) provided with the linear or strip-like heating conductors (16) is approximately 5.3 to 15% of the thickness of the thermoplastic intermediate layer.

3. The electrically heated laminated glass sheet as claimed in claim 2, characterized in that the support foil (23) having the heating conductors (16) has a thickness of approximately 40 to 120 microns and preferably has a thickness of approximately 50 microns.

4. The electrically heated laminated glass sheet as claimed in any one of the claims 1 through 4, characterized in that the openings (24) have a breadth of at least 2 mm.

5. The electrically heated laminated glass sheet as claimed in any one of the claims 1 through 4, characterized in that the support foil (23) provided with the heating conductors (16) is provided with heads (26) projecting from the laminated glass sheet, said heads being provided with a metallic conducting layer and serving as terminal tabs for electrical connection.

6. The use of an electrically heated laminated glass sheet as claimed in any one of the claims 1 through 5 as a motor vehicle windscreen with a partial heating surface adjacent to the end settings of the screen wipers under the viewing area along the lower edge of the sheet.

### Revendications

1. Vitrage feuilleté chauffable électriquement fait d'au moins deux feuilles de verre qui sont unies l'une à l'autre au moyen d'une couche intercalaire thermoplastique en matière plastique transparente, dans laquelle sont noyés des conducteurs électriques chauffants linéaires ou en forme de bandes, caractérisé en ce que les conducteurs chauffants (16) sont appliqués sur une pellicule de support propre (23) en une matière plastique de solidité et de résistance à la flexion supérieures à celles de la couche intercalaire en matière thermoplastique, et que cette pellicule (23) portant les conducteurs chauffants (16) est disposée entre la couche intercalaire thermoplastique (21) et l'une (20) des feuilles de verre (19, 20) et est pourvue, entre les conducteurs chauffants (16), d'ouvertures (24) qui, lors de la jonction des couches individuelles, sont remplies par la matière de la pellicule thermoplastique (21) et assurent ainsi un collage avec la feuille de verre (20) adjacente dans la zone des ouvertures (24).

2. Vitrage feuilleté chauffable électriquement suivant la revendication 1, caractérisé en ce que l'épaisseur de la pellicule de support (23) pourvue des conducteurs chauffants (16) linéaires ou en forme de bandes est d'environ 5,3 à 15% de l'épaisseur de la couche intercalaire thermoplastique.

3. Vitrage feuilleté chauffable électriquement suivant la revendication 2, caractérisé en ce que la pellicule de support (23) pourvue des conducteurs chauffants (16) a une épaisseur d'environ 40 à 120 micromètres et de préférence d'environ 50 micromètres.

4. Vitrage feuilleté chauffable électriquement suivant les revendications 1 à 3, caractérisé en ce que les ouvertures (24) ont une largeur d'au moins 2 mm.

5. Vitrage feuilleté chauffable, électriquement suivant les revendications 1 à 4, caractérisé en ce que la pellicule de support (23) portant les conducteurs chauffants (16) est pourvue de saillies (26) dépassant du vitrage feuilleté, qui sont pourvues d'une couche conductrice métallique et servent de barrettes de connexion pour l'amenée de courant.

6. Utilisation d'un vitrage feuilleté chauffable électriquement suivant les revendications 1 à 5 à titre de pare-brise de véhicule automobile comportant une surface chauffante partielle dans la zone de la position d'extrémité des essuie-glaces en dessous du champ de vision le long du bord inférieur du vitrage.

**Fig. 1**

Fig. 2

0 155 614

**Fig. 3**